# EUROPEAN PATENT APPLICATION

(11) **EP 4 714 291 A1**
(43) Date of publication of application: **25.03.2026**
(21) Application number: 23937271.7
(22) Date of filing: 16.11.2023
(51) Int. Cl.: A43B 13/18, A43B 13/37, A43B 7/32

(54) **SOLE AND SHOE**

(30) Priority: 16.05.2023 CN 202310551789
(71) Applicant: Sanliuyidu (China) Co., Ltd., Quanzhou, Fujian 362261 (CN); Sanliuyidu (Xiamen) Sports Technology Co., Ltd., Xiamen, Fujian 361000 (CN)
(72) Inventor: LIU, Siqi, Xiamen, Fujian 361000 (CN); WEI, Shutao, Xiamen, Fujian 361000 (CN); DAI, Huilian, Xiamen, Fujian 361000 (CN); ZHOU, Tao, Xiamen, Fujian 361000 (CN); HOU, Zhaohui, Xiamen, Fujian 361000 (CN)
(74) Representative: Santarelli
(86) International application number: PCT/CN2023/132162
(87) International publication number: WO 2024/234598

(57) **Abstract**

The present invention discloses a sole and a shoe, belonging to the field of shoes, a sole, comprising a midsole and an outsole, the midsole being attached to one side of the outsole, the midsole comprising a midsole body and a follower body, the follower body comprising a follower part and a follower body comprises follower part and deformation space, and follower part and deformation space are distributed adjacent to each other; the follower part is provided integrally molded with the midsole body, and the deformation space is provided on at least one of the upper surface of the midsole body, the lower surface of the midsole body, along the thickness direction of the midsole body, or along the width direction of the midsole body; or the follower part is provided separately from the midsole body and is connected to the outsole, and the follower part is separated from the midsole body by the deformation space. Alternatively, the follower part is provided separately from the midsole body and is connected to the outsole, and the follower part is separated from the midsole body by the deformation space. The sole and shoe of the present invention reduce the shear force generated at the ankle and knee joints by horizontally oriented forces and reduce the occurrence of sports injuries.

## Description

### Technical Field

The present invention belongs to the field of shoes, and in particular relates to a sole and a shoe.

### Background of the Invention

As an indispensable daily necessity in people's daily life, the function of shoes is initially used to protect the feet from the harm of the external environment, so that the safety of walking is guaranteed. With the rapid development of living standards, people's requirements for shoes are getting higher and higher, some have breathable and dry effect, some have warm effect, some have anti-slip effect, and some have shock absorption effect.

Nowadays, the sole usually comprises outsole and midsole, of which the outsole is the bottom layer in contact with the ground, wear-resistant and anti-skid is its functional attribute; the midsole is set on the top of the outsole, which has elasticity and can play a protective role for the foot, and is the key point of the whole sole structural design, which is to ensure that the whole shoe has a good cushioning, stability, shock absorption and energy return, It is an important component to ensure that the shoes have good cushioning, stability, shock absorption and energy return, which will directly affect the functionality and comfort of the shoes.

Some studies have shown that for every 1 kilometer of walking, a person needs to withstand 600-700 gravitational impacts on one foot, and the impacts are even greater in the case of intense exercise. When running, the impact force of the foot touching the ground will reach 2-4 times of the human body weight. This impact force produces shock waves in the human body, causing different degrees of injury to various parts of the human body. This requires that the shoe sole should have a certain function of absorbing and reducing the impact of the ground, i.e. shock absorption and cushioning performance.

Most of the shoe soles in the existing technology rely on the selection of midsole materials to obtain better shock absorption performance, and generally realize the shock absorption effect through the vertically compressible and releasable characteristics of the midsole materials themselves, which cannot effectively distribute the impact force evenly, and are prone to cause sports injuries.

### Summary of the Invention

### Technical Issues

It is an object of the present invention to propose a sole and a shoe to reduce the shear force generated at the ankle and knee joints by the force in the horizontal direction and to reduce the occurrence of sports injuries.

### Technical Solutions

To achieve this, the present invention utilizes the following technical solutions:

The present invention provides a sole comprising a midsole and an outsole, the midsole being attached to a side of the outsole, the midsole comprising a midsole body and a follower body, the follower body comprising a follower part and a deformation space, the follower part and the deformation space being disposed adjacent to each other;

Said follower part and midsole body are set up in two ways, one of which is as follows: the follower part is set up in one piece with the midsole body, and the deformation space is set up on at least one of the upper surface, lower surface, and running along the thickness direction of the midsole body, or along the width direction of the midsole body, and another of which is as follows: the follower part is disposed separately from the midsole body and is connected to the outsole, the follower part being separated from the midsole body by a deformation space.

Preferably, the supporting piece is also included, wherein the supporting piece is at least coupled to the follower part, against the follower part, or is capable of being coupled to the follower part when the midsole deforms.

Preferably, the supporting piece extends into the deformation space.

Preferably, the midsole further comprises a sidewall, a peripheral edge of the midsole body away from the side of the outsole having a sidewall, and the support piece extending to the sidewall.

Preferably, the supporting piece covers the sidewall and extends to the upper surface of the shoe.

Preferably, the supporting piece is a foam sheet or rubber elastomer sheet or carbon plate.

Preferably, the follower part is made of a material with a density and/or elasticity different from the density and/or elasticity of the midsole.

Preferably, the follower body corresponds to the forefoot part and/or the hindfoot part of the human foot.

The present invention also provides shoes, comprising a sole as described above. Beneficial Effects

The beneficial effects of the present invention:
1. With the follower body, the midsole not only compresses and releases vertically, but also deforms and cushions horizontally to equalize impact forces; in the process of movement, the follower part is deformed by the force and tilted to the deformation space, the deformation of the follower part tilts to absorb the force, which reduces the force in the horizontal direction of the sole, and then reduces the shear force generated by the force in the horizontal direction in the ankle and knee joints, and reduces the occurrence of sports injuries.
2. The follower part which is set up as a whole with the midsole, cut out the deformation space directly on the midsole to get the follower part, which is easy and convenient to produce.
3. The design of the follower body corresponding to the forefoot part of the human foot is in line with the distribution of the force on the sole of the human sports foot, which is targeted and practical.
4. Through the supporting piece's specific structure setting, it can evenly distribute the force on the bottom of the foot; enhance the support stability performance, prevent side-turning; and be more conducive to the fit with the outsole or insole.
5. Separate the follower part and the midsole and connect them to the outsole separately to realize shock absorption, knee protection and reduction of sports injuries by means of assembly and coordination.
6. The specific structure of the supporting piece improves the stability of the support.

### Brief Description of the Drawings

FIG.1 is a schematic diagram of a top view structure of the sole in Embodiment I of the present invention.
FIG.2 is a schematic diagram of a main view structure of the sole in Embodiment I of the present invention.
FIG.3 is a schematic diagram of a main view structure of the sole in Embodiment II of the present invention.
FIG.4 is a schematic diagram of a top view structure of the sole in Embodiment III of the present invention.
FIG.5 is a schematic diagram of a top view structure of the sole in Embodiment IV of the present invention.
FIG.6 is a schematic diagram of a top view structure of the sole in Embodiment V of the present invention.
FIG.7 is a schematic diagram of a top view structure of the supporting piece in Embodiment V of the present invention.
FIG.8 is a schematic diagram of a top view structure of the sole in Embodiment VI of the present invention.
FIG.9 is a schematic diagram of a top view structure of the supporting piece in Embodiment VI of the present invention.
FIG.10 is a schematic diagram of a top view structure of the sole in Embodiment VII of the present invention.
FIG.11 is a schematic diagram of a top view structure of the supporting piece in Embodiment VII of the present invention.
FIG.12 is a schematic diagram of a top view structure of the sole in Embodiment VIII of the present invention.

Legends in the drawings: 1-outsole, 2-midsole, 3-follower body, 31-follower part, 32-deformation space, 4-supporting piece, 21-midsole body, 22-sidewall.

### Detailed Description of Embodiments

The present invention is further described in conjunction with the accompanying drawings and specific embodiments.

The contents not described in detail in this Specification are prior art known to those skilled in the art. In the description of the present invention, it is to be understood that the terms "center", "up", "down", "front", "back", "left", "right", "vertical", "horizontal" ", "top", "bottom", "inside", "outside", "clockwise" or "counterclockwise", etc. indicate orientations or positional relationships based on those shown in the accompanying drawings, and are intended only to facilitate the description of the present invention and to simplify the description, and are not intended to indicate or imply that the device or element referred to must have a particular orientation, be constructed and operated in a particular orientation, and therefore are not to be construed as a limitation of the present invention. Furthermore, the terms "first", "second", "third", etc., are used only for descriptive purposes of differentiation and are not to be understood as indicating or implying relative importance.

### Embodiment I:

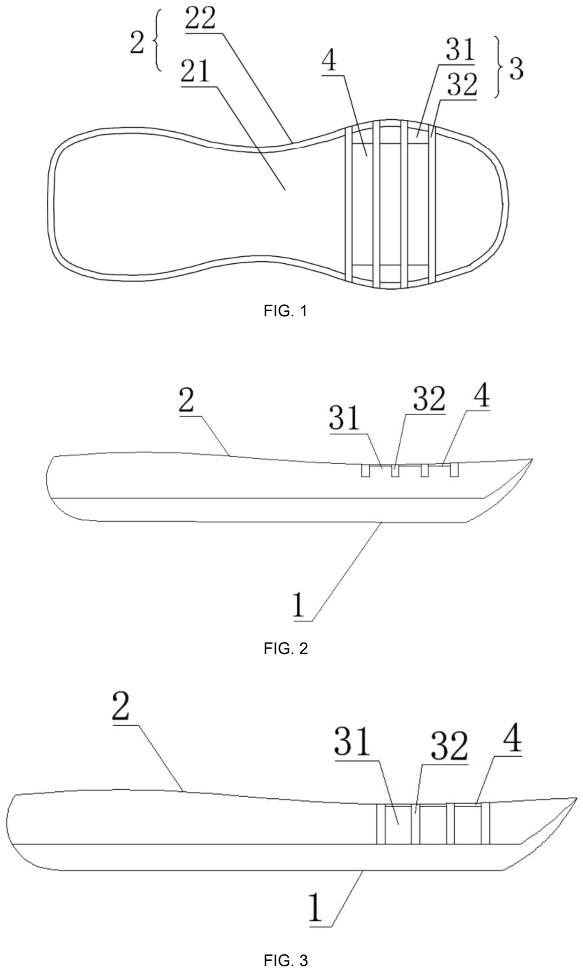

As shown in FIGS.1 to 2, the sole provided in this embodiment, comprises a midsole 2 and an outsole 1, the midsole 2 being attached to an upper side of the outsole 1. The midsole 2 comprises a midsole body 21 and a follower body 3, the follower body 3 comprises a follower part 31 and a deformation space 32, the follower part 31 and the deformation space 32 are distributed in a left-right neighboring manner. Through the setting of follower body 3, not only the midsole 2 itself can be compressed and released vertically, but also can be deformed and cushioned horizontally, so as to effectively equalize the impact force. The follower part 31 is integrally molded with the midsole body 21, and the density and elasticity of the follower body 3 is the same as that of the midsole 2, and the material is foam. The deformation space 32 is provided on the upper surface of the midsole 2 and runs along the width direction of the midsole 2. Of course, in other embodiments, the deformation space 32 may also be provided on the lower surface of the midsole 2. The follower body 3 of this embodiment corresponds to the forefoot area of the human foot. The distribution of human foot force is concentrated in the forefoot and hindfoot parts, the follower body 3 corresponds to the human foot forefoot parts of the design of the human sports foot force distribution situation, targeted, practical and good. During the movement process, the follower part 31 is deformed by the force and tilted to the deformation space 32, and the deformation of the follower part 31 tilts to absorb the force, thus reducing the force in the horizontal direction of the sole, and then reducing the shear force generated by the force in the horizontal direction in the ankle and knee joints, and reducing the occurrence of the sports injury. The follower part 31 is integrally provided with the midsole 2, and the follower part 31 can be obtained by directly cutting out the deformation space 32 on the midsole 2, which is simple and convenient to produce.

Therein, also included is a supporting piece 4, the supporting piece 4 of this embodiment being attached to the follower part 31, specifically fixed to the top of the follower part 31, the supporting piece 4 being a foam sheet or a rubber elastomer sheet or a carbon plate. Of course, in other embodiments the supporting piece 4 may also be secured to the midsole 2 and then be held against the follower part 31 or be able to be held against the follower part 31 when the midsole 2 deforms. Through the setting of supporting piece 4, the force on the sole can be evenly distributed, the stability of support can be enhanced to prevent lateral overturning, and it is more conducive to the fit of outsole or insole.

This embodiment also provides shoes, comprising a sole as described above. Embodiments of the Invention

### Embodiment I:

As shown in FIG.1 to FIG.2, the sole provided in this embodiment, comprises a midsole 2 and an outsole 1, the midsole 2 being attached to an upper side of the outsole 1. The midsole 2 comprises a midsole body 21 and a follower body 3, the follower body 3 comprises a follower part 31 and a deformation space 32, the follower part 31 and the deformation space 32 are distributed in a left-right neighboring manner. Through the setting of follower body 3, not only the midsole 2 itself can be compressed and released vertically, but also can be deformed and cushioned horizontally, so as to effectively equalize the impact force. The follower part 31 is integrally molded with the midsole body 21, and the density and elasticity of the follower body 3 is the same as that of the midsole 2, and the material is foam. The deformation space 32 is provided on the upper surface of the midsole 2 and runs along the width direction of the midsole 2. Of course, in other embodiments, the deformation space 32 may also be provided on the lower surface of the midsole 2. The follower body 3 of this embodiment corresponds to the forefoot area of the human foot. The distribution of human foot force is concentrated in the forefoot and hindfoot parts, the follower body 3 corresponds to the human foot forefoot parts of the design of the human sports foot force distribution situation, targeted, practical and good. During the movement process, the follower part 31 is deformed by the force and tilted to the deformation space 32, and the deformation of the follower part 31 tilts to absorb the force, thus reducing the force in the horizontal direction of the sole, and then reducing the shear force generated by the force in the horizontal direction in the ankle and knee joints, and reducing the occurrence of the sports injury. The follower part 31 is integrally provided with the midsole 2, and the follower part 31 can be obtained by directly cutting out the deformation space 32 on the midsole 2, which is simple and convenient to produce.

Therein, also included is a supporting piece 4, the supporting piece 4 of this embodiment being attached to the follower part 31, specifically fixed to the top of the follower part 31, the supporting piece 4 being a foam sheet or a rubber elastomer sheet or a carbon plate. Of course, in other embodiments the supporting piece 4 may also be secured to the midsole 2 and then be held against the follower part 31 or be able to be held against the follower part 31 when the midsole 2 deforms. Through the setting of supporting piece 4, the force on the sole can be evenly distributed, the stability of support can be enhanced to prevent lateral overturning, and it is more conducive to the fit of outsole or insole.

This also provides shoes, comprising a sole as described above.

### Embodiment II:

As shown in FIG.3, this embodiment differs from Embodiment I in that:

The follower part is provided separately from the midsole body and is connected to the outsole, and the follower part is separated from the midsole body by a deformation space. The deformation space 32 runs along the thickness direction and the width direction of the midsole body 21, and the follower part 31 is glued to the top of the outsole 1. The follower part 31 is made of a material with a density and/or elasticity different from the density and/or elasticity of the midsole 2. The material may be set higher than the midsole 2 or lower than the midsole 2 according to the movement properties.

Specifically, the midsole body /follower part material may be made of EVA foam, ETPU foam, supercritical foam; for example, the midsole body is made of EVA foam with a hardness of 55±3C, and the follower part 31 is made of a high resilience foam with a hardness of 35-40C. Since there is a clear correspondence between the density and the hardness of the common commercially available foaming materials for sole preparation, the difference in density can be reflected according to the size of the hardness; another example is that the midsole body is prepared with foaming materials with a resilience of 50-60%, and the follower part is prepared with foaming materials with a resilience of 65-70%.

The follower part 31 is separated from the midsole 2 and set in the outsole 1, so as to realize shock absorption by means of assembly.

### Embodiment III:

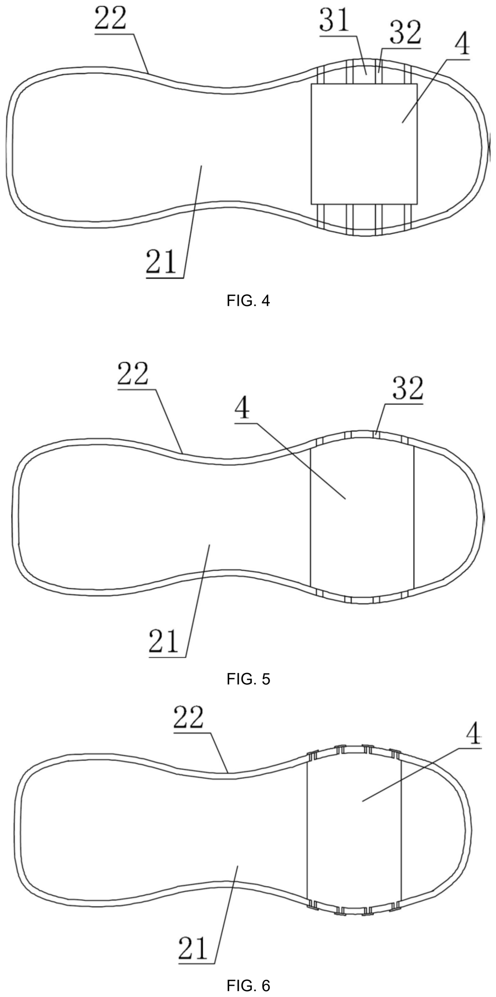

As shown in FIG.4, this embodiment differs from Embodiment I in that:

The supporting piece 4 extends to the deformation space 32, covering the deformation space 32 and improving the support stability.

### Embodiment IV:

As shown in FIG.5, this embodiment differs from Embodiment III in that:

The midsole 2 also comprises a sidewall 22, the upper side of the midsole body 21 has a sidewall 22 on the periphery, and the supporting piece 4 extends to the inner wall of the sidewall 22. Further improve the support stability. In other embodiments, the supporting piece 4 may also extend only to the inner wall of a sidewall 22 on one side, which sidewall is for example the inner sidewall of the shoe or the outer sidewall of the shoe (said inner sidewall is the side of the shoe that is close to each other in a pair of left and right footed shoes). sidewall, and the sidewall on the outside of the shoe is the sidewall on the side opposite to that sidewall), the preferred one being the sidewall on the outside of the shoe, which can further improve the support stability, reduce the risk of lateral overturning to the outside, and improve the protection of the shoe.

### Embodiment V:

As shown in FIGS.6 to 7, this embodiment differs from Embodiment IV in that:

The supporting piece 4 extends to the inner wall of the sidewall 22, and part of it extends through the sidewall 22 to the outside of the sidewall 22. To further improve the support stability, in other embodiments, the supporting piece 4 may also extend only to the inner wall of the sidewall 22 on one side and be connected to the outer wall of the sidewall through the sidewall 22, the sidewall on that side being, for example, the inner sidewall of the shoe or the outer sidewall, preferably the outer sidewall of the shoe. The sidewall on the outside of the shoe can further improve the support stability, reduce the risk of lateral overturning to the outside, and improve the protection of the shoe.

### Embodiment VI:

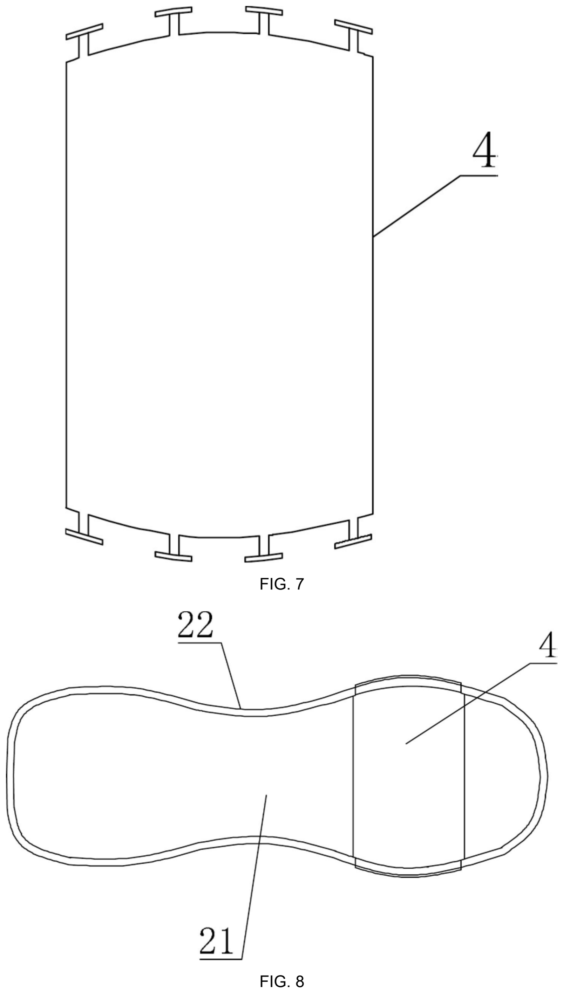

As shown in FIGS.8 to 9, this embodiment differs from Embodiment IV in that:

The supporting piece 4 extends to the inner wall of the sidewall 22, and the supporting piece 4 extends upwardly to cover the inner wall of the sidewall 22 and extends to the upper surface of the shoe. The supporting piece 4 works in conjunction with the upper surface of the shoe to greatly improve support stability.

### Embodiment VII:

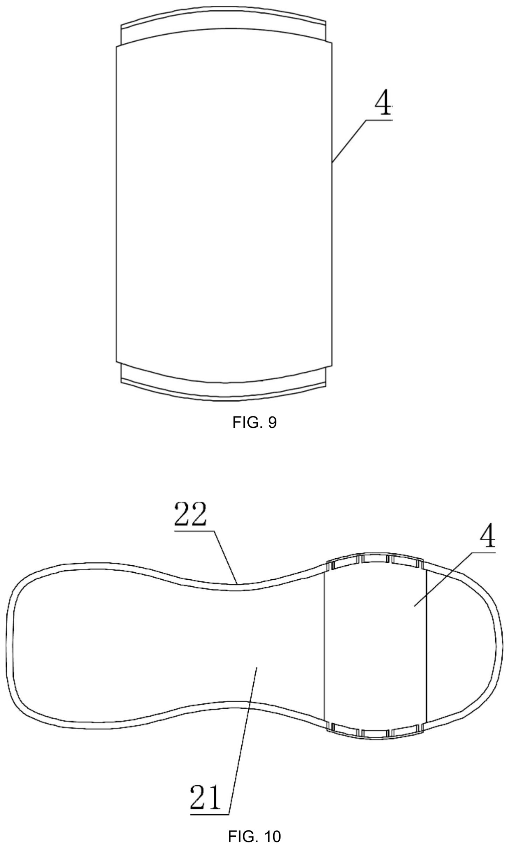

As shown in FIGS.10 to 11, this embodiment differs from Embodiment V in that:

The supporting piece 4 which extends to the outside of the sidewall 22 extends upwardly to cover the outside wall of the sidewall 22, and extends to the upper surface of the shoe. The supporting piece 4 works in conjunction with the upper surface of the shoe to greatly improve support stability.

### Embodiment VIII:

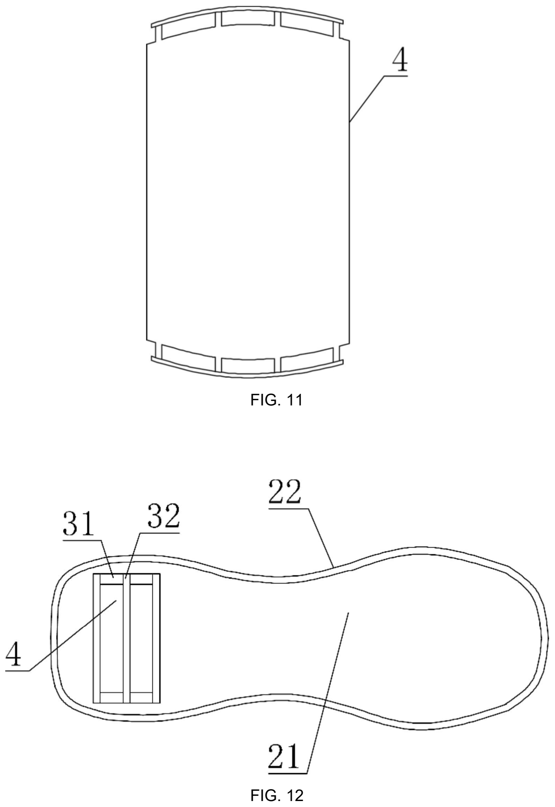

As shown in FIG.12, this embodiment differs from Embodiment I in that:

The follower body 3 is set at the rear foot area setting, and the deformation space 32 does not run through the midsole 2 in the width direction of the midsole 2.

The above embodiments are intended only to illustrate the technical solutions of the present invention and are not intended to be a limitation thereof; although the invention is described in detail with reference to the foregoing embodiments, it should be understood by those of ordinary skill in the art; it is still possible to modify the technical solutions documented in the preceding embodiments, or to make equivalent substitutions for some of the technical features therein; and these modifications or substitutions do not take the essence of the corresponding technical solutions out of the spirit and scope of the technical solutions of the embodiments of the present invention.

## Claims

1. A sole, comprising a midsole (2) and an outsole (1), said midsole being connected to one side of the outsole (1), **characterized in that**:
said midsole (2) comprises a midsole body (21) and a follower body (3), said follower body (3) comprises a follower part (31) and a deformation space (32), said follower part (31) and said deformation space (32) are distributed adjacent to each other;
said follower part (31) is integrally molded with said midsole body (21), said deformation space (32) being provided on at least one of the upper surface of said midsole body (21) and on the lower surface, and running along the thickness direction of said midsole body (21) or along the width direction of said midsole (2) in the width direction; alternatively, said follower part (31) is set apart from the midsole body (21) and connected to the outsole (1), said follower part (31) being separated from said midsole body (21) by a deformation space (32).

2. The sole according to Claim 1, **characterized in that**:
it also comprises a supporting piece (4);
said supporting piece (4) is at least attached to, abutted by, or capable of abutting said follower part (31) in the event of deformation of said midsole (2).

3. The sole according to Claim 2, **characterized in that**:
said supporting piece (4) extends into said deformation space (32).

4. The sole according to Claim 3, **characterized in that**:
said midsole (2) further comprises sidewall (22);
said midsole body (21) has a sidewall (22) around the peripheral edge of the side away from said outsole (1);
said supporting piece (4) extends to said sidewall (22).

5. The sole according to Claim 4, **characterized in that**:
said supporting piece (4) covers said sidewall (22) and extends to the upper surface of the shoe.

6. The sole according to Claim 2, **characterized in that**:
said supporting piece (4) is a foam sheet or rubber elastomer sheet or carbon plate.

7. The sole according to Claim 1, **characterized in that**:
said follower part (31) is made of a material with a density and/or elasticity different from that of said midsole (2).

8. The sole according to Claim 1, **characterized in that**:
said follower body (3) corresponds to a forefoot part and/or a hindfoot part of the human foot.

9. A shoe, **characterized in that** it comprises the sole as claimed in any one of claims 1-8.
